# FASCICULE DE BREVET EUROPEEN

(11) **EP 3 095 645 B1**
(45) Date de publication et mention de la délivrance du brevet: **04.10.2017**
(21) Numéro de dépôt: 16168371.9
(22) Date de dépôt: 04.05.2016
(51) Int. Cl.: B60R 13/02

(54) **PIÈCE DE DÉCORATION FIXÉE DANS UN HABITACLE DE VÉHICULE**
DEKORATIONSTEIL, DAS IN EINEM FAHRZEUGINNENRAUM BEFESTIGT IST
ORNAMENT ATTACHED IN A VEHICLE PASSENGER COMPARTMENT

(30) Priorité: 21.05.2015 FR 1554564
(43) Date de publication de la demande: 23.11.2016
(73) Titulaire: PSA Automobiles SA, 78300 Poissy (FR)
(72) Inventeur: VANNESTE, PASCAL, 77240 VERT ST DENIS (FR); PEYLABOUD, PATRICK, 78610 LE PERRAY EN YVELINES (FR); ROUSSEAU, FREDERIC, 28320 GALLARDON (FR); MATUSIK, JACQUES, 78180 MONTIGNY LE BRETONNEUX (FR); MORAUX, SEBASTIEN, 78280 GUYANCOURT (FR)

(56) Documents cités:
- EP-A1- 1 454 553
- EP-A2- 2 147 610
- DE-U1-202011 050 956
- FR-A1- 2 933 421
- JP-A- 2009 090 746

## Description

La présente invention concerne de manière générale une pièce de décoration fixée dans un habitacle de véhicule automobile, telle qu'une garniture de tableau de bord, de console centrale ou encore de portière.

Il est connu dans l'art antérieur des pièces de décoration agencées à l'intérieur d'un habitacle de véhicule. En effet, de nos jours, sur certains véhicules haut de gamme, les constructeurs proposent, généralement en option, différents types d'habillage d'intérieur de plus en plus luxueux. Si à l'époque, le revêtement en cuir des sièges ou d'autres éléments d'habitacle tels que le volant ou l'accoudoir central était par exemple un luxe, il est de plus en plus répandu et d'autres matériaux tels que du bois précieux, des baguettes en aluminium ou du même genre, ont été proposés pour habiller les éléments d'habitacle de véhicule. Ces éléments décoratifs étant relativement rigides, ils peuvent être facilement fixés dans l'habitacle via vissage ou collage, par exemple. En revanche, des éléments décoratifs qui seraient souples, relativement au bois précieux, par exemple, ont plus de mal à être fixés dans un habitacle. Dans la mesure où, de nos jours, des éléments décoratifs souples sont maintenant utilisés comme matériaux décoratifs, il a été nécessaire de trouver comment fixer ces éléments décoratifs dans l'habitacle du véhicule.

Par exemple, le document DE 10 2009 043 350 décrit un ciel de toit d'un véhicule automobile dans lequel sont incrustés des cristaux au moyen d'un film souple. Cependant, ce document ne donne pas de solution au problème mentionné car l'incrustation est un procédé compliqué, peu fiable et couteux. JP 2009 090746 A divulgue une pièce de décoration d'habitacle de véhicule comprenant un film souple, agencée pour être fixée dans l'habitacle, la pièce de décoration comprenant en outre un insert support au moins partiellement recouvert par le film souple et présentant une interface de fixation sur un élément d'habitacle. Un but de la présente invention est de répondre aux inconvénients de l'art antérieur mentionnés ci-dessus et en particulier, tout d'abord, de proposer une pièce de décoration que l'on peut facilement et solidement installer dans un habitacle de véhicule ainsi qu'un procédé d'installation de cette pièce de décoration dans l'habitacle du véhicule.

Pour cela un premier aspect de l'invention concerne une pièce de décoration d'habitacle de véhicule comprenant un film souple comprenant du strass, agencée pour être fixée dans l'habitacle, caractérisée en ce que la pièce de décoration comprend en outre un insert support au moins partiellement recouvert par le film souple et présentant une interface de fixation sur un élément d"habitacle. De cette manière, le film souple est facilement et solidement fixé sur un élément d'habitacle du véhicule automobile.

De manière avantageuse, l'interface de fixation est prévue sur une surface de l'insert support différente de celle recouverte au moins partiellement par le film souple. De cette manière, on maximise la surface de film souple exposée.

Une réalisation particulièrement intéressante consiste en ce que l'interface de fixation est un plot de fixation agencé pour être attaché par déformation à l'élément d'habitacle du véhicule. Ainsi, la fixation est robuste et l'interface de fixation est peu chère.

Avantageusement, l'insert support est en matériau polymère rigide. Ainsi, il est facile à manipuler et peu cher.

Un second aspect de l'invention est un ensemble élément d'habitacle de véhicule sur lequel est fixé une pièce de décoration d'habitacle selon le premier aspect de l'invention, caractérisé en ce que l'élément d'habitacle est un élément de planche de bord, d'accessoire de porte ou de console centrale.

Une réalisation particulièrement intéressante consiste en ce que l'élément d'habitacle de véhicule est une pièce moussée revêtue d'une peau. De cette manière, l'élément d'habitacle est protégé.

De manière avantageuse, l'insert support a une forme agencée de sorte à pouvoir être logé dans un renfoncement prévu dans l'élément d'habitacle. Ainsi, on diminue les risques d'endommagement.

Un troisième aspect de l'invention est un procédé d'assemblage d'une pièce de décoration selon le premier aspect de l'invention sur un élément d'habitacle de véhicule comprenant une étape de fixation d'un film souple incluant du strass sur au moins une première surface d'un insert support, ledit insert support comprenant une interface de fixation sur une seconde surface distincte de la première surface, une étape de montage de l'insert support sur l'élément d'habitacle dans laquelle l'interface de fixation est agencée pour traverser l'élément d'habitacle, et une étape de fixation du support sur un substrat par déformation de l'interface de fixation.

Avantageusement, la première étape de fixation est un thermocollage du film souple sur l'insert support. De cette manière, la fixation est robuste et fiable.

Un quatrième aspect de l'invention est un véhicule automobile comportant au moins une pièce de décoration d'habitacle selon le premier aspect de l'invention.

D'autres caractéristiques et avantages de la présente invention apparaîtront plus clairement à la lecture de la description détaillée qui suit d'un mode de réalisation de l'invention donné à titre d'exemples nullement limitatif et illustré par les dessins annexés, dans lesquels :

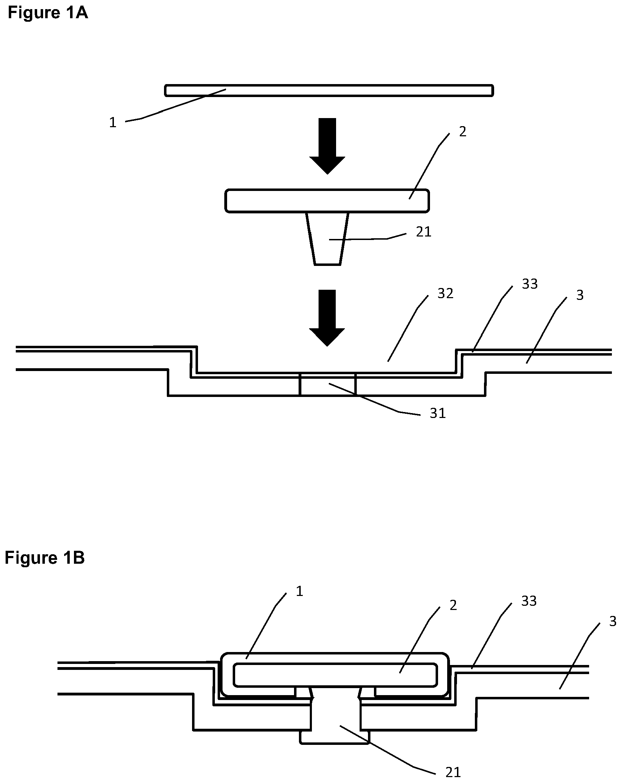

- les figures 1A et 1B représentent un premier exemple d'une pièce de décoration selon l'invention avant et après fixation sur une pièce d'habitacle, respectivement.

La figure 1A représente un mode de réalisation préféré d'une pièce de décoration d'habitacle de véhicule et de son assemblage, dans lequel la pièce de décoration d'habitacle comprend un film souple 1 comprenant du strass et est agencée pour être fixée sur un élément d'habitacle du véhicule. Par strass, il est entendu ici tout élément qui brille d'un éclat trompeur, tel que des éléments du type pierres précieuses ou semi précieuses ou des cristaux, par exemple.

La pièce de décoration comprend également un insert support 2 qui est de préférence en matériau polymère rigide et est au moins partiellement recouvert par le film souple 1. Par « au moins partiellement », il est entendu que l'insert support 2 a une première surface (celle du haut dans la figure 1A) qui fait face au film souple 1 dans la figure 1A et qui a une aire supérieure, égale ou inférieure à celle du film souple 1 de sorte que, par exemple, le film souple 1 déborde sur une ou plusieurs surfaces adjacentes ou autre, telle que des surfaces latérales ou opposées comme représenté sur la figure 1B. L'insert support 2 présente une interface de fixation 21 sur un élément d'habitacle 3 et plus préférablement une interface de fixation 21 sous forme d'un plot de fixation 21 agencé pour être attaché par déformation à l'élément d'habitacle 3 du véhicule. Par déformation il est entendu tous types de procédé conventionnels tels que le rivetage, le bouterollage ou autres similaires, en effet comme on le voit dans la figure 1A, le plot de fixation 21 est agencé pour traverser un alésage 31 prévu dans l'élément d'habitacle 3 puis, comme montré dans la figure 1B, être déformé pour fixer l'insert support 2, et le film souple 1, sur l'élément d'habitacle 3. De préférence, le plot de fixation 21 est prévu sur une surface de l'insert support 2 différente de celle recouverte au moins partiellement par le film souple 1.

La figure 1B représente un ensemble d'un élément d'habitacle de véhicule sur lequel est fixée la pièce de décoration d'habitacle décrite plus haut, où l'élément d'habitacle 3 est de préférence un élément de planche de bord, d'accessoire de porte ou de console centrale et est une pièce moussée revêtue d'une peau 33 telle que du cuir ou du TEP. Egalement, comme on peut le voir sur les figures 1A et 1B, l'insert support 2 a de préférence une forme agencée de sorte à pouvoir être logé dans un renfoncement 32 prévu dans l'élément d'habitacle 3.

Par ailleurs, comme on le voit schématiquement représenté sur la figure 1A, l'invention porte également sur un procédé d'assemblage d'une pièce de décoration 1, 2 telle que décrite plus haut sur un élément d'habitacle 3 de véhicule tel qu'une planche de bord, par exemple. Le procédé comprend différentes étapes dont, en premier lieu, une étape de fixation du film souple 1 incluant du strass sur au moins une première surface de l'insert support 2 par exemple par thermocollage. Cette première surface est de préférence la surface qui fera face à l'habitacle une fois l'insert monté de manière à ce que les occupants du véhicule et donc de son habitacle puisse le voir. Par « au moins une première surface », il est entendu que le film souple 1 peut avoir une aire supérieure à la première surface et ainsi déborder sur une ou plusieurs surfaces adjacentes ou autres, telle que des surfaces latérales ou opposées à la première surface. L'insert support 2 comprend une interface de fixation 21 sur une seconde surface distincte de la première surface, de préférence la surface opposée à la première surface, c'est-à-dire celle faisant face à l'élément d'habitacle 3.

Une fois le film souple ainsi appliqué sur l'insert, on exécute une étape de montage de l'insert support 2 sur l'élément d'habitacle 3 dans laquelle l'interface de fixation 21 est agencée pour traverser l'élément d'habitacle 3 à travers un alésage 31. Comme on le voit sur la figure 1A (et 1B), le principe consiste en ce que le plot de fixation 21 pénètre dans l'alésage 31 et traverse l'élément 3. Ainsi, on peut ensuite exécuter l'étape de fixation de l'insert support 2 sur l'élément d'habitacle 3 par déformation de l'interface de fixation 21.

Enfin, l'invention porte également sur un véhicule automobile comportant au moins une pièce de décoration d'habitacle telle que décrite plus haut, ou au moins un ensemble élément d'habitacle et pièce de décoration tel que décrit plus haut.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Pièce de décoration d'habitacle de véhicule comprenant un film souple (1) comprenant du strass, agencée pour être fixée dans l'habitacle, la pièce de décoration comprenant en outre un insert support (2) au moins partiellement recouvert par le film souple et présentant une interface de fixation (21) sur un élément d'habitacle (3).

2. Pièce de décoration d'habitacle de la revendication 1, **caractérisée en ce que** l'interface de fixation (21) est prévue sur une surface de l'insert support (2) différente de celle recouverte au moins partiellement par le film souple (1).

3. Pièce de décoration d'habitacle de la revendication 1 ou 2, **caractérisée en ce que** l'interface de fixation (21) est un plot de fixation agencé pour être attaché par déformation à l'élément d'habitacle (3) du véhicule.

4. Pièce de décoration d'habitacle de l'une quiconque des revendications 1 à 3, **caractérisée en ce que** l'insert support (2) est en matériau polymère rigide.

5. Ensemble élément d'habitacle de véhicule sur lequel est fixé une pièce de décoration d'habitacle de l'une des revendications 1 à 4, **caractérisé en ce que** l'élément d'habitacle (3) est un élément de planche de bord, d'accessoire de porte ou de console centrale.

6. Ensemble selon la revendication 5, **caractérisé en ce que** l'élément d'habitacle de véhicule (3) est une pièce moussée revêtue d'une peau (33).

7. Ensemble selon la revendication 5 ou 6, **caractérisé en ce que** l'insert support (2) a une forme agencée de sorte à pouvoir être logé dans un renfoncement (32) prévu dans l'élément d'habitacle (3).

8. Procédé d'assemblage d'une pièce de décoration (1, 2) sur un élément d'habitacle (3) de véhicule comprenant
une étape de fixation d'un film souple (1) incluant du strass sur au moins une première surface d'un insert support (2), ledit insert support comprenant une interface de fixation (21) sur une seconde surface distincte de la première surface,
une étape de montage dudit insert support sur l'élément d'habitacle dans laquelle l'interface de fixation est agencée pour traverser l'élément d'habitacle, et
une étape de fixation dudit support sur un substrat par déformation de l'interface de fixation.

9. Procédé d'assemblage selon la revendication 8, **caractérisé en ce que** la première étape de fixation est un thermocollage dudit film souple (1) sur l'insert support (2).

10. Véhicule automobile comportant au moins une pièce de décoration d'habitacle selon l'une des revendications 1 à 4.

## Patentansprüche

1. Fahrzeuginnenraum-Dekorationsteil, das eine biegsame Folie (1), die Strass umfasst, umfasst, die eingerichtet ist, um in dem Fahrzeuginnenraum befestigt zu sein, wobei das Dekorationsteil außerdem einen Trageinsatz (2) umfasst, der mindestens teilweise durch eine biegsame Folie abgedeckt ist und eine Befestigungsschnittfläche (21) auf einem Fahrzeuginnenraumelement (3) aufweist.

2. Dekorationsteil nach Anspruch 1, **dadurch gekennzeichnet, dass** die Befestigungsschnittfläche (21) auf einer Oberfläche des Trageinsatzes (2) des vorgesehen ist, die von der unterschiedlich ist, die mindestens teilweise durch die biegsame Folie (1) abgedeckt ist.

3. Fahrzeuginnenraum-Dekorationsteil nach Anspruch 1 oder 2, **dadurch gekennzeichnet, dass** die Befestigungsschnittfläche (21) ein Befestigungsklotz ist, der eingerichtet ist, um durch Verformung an dem Fahrzeuginnenraumelement (3) des Fahrzeugs befestigt zu sein.

4. Fahrzeuginnenraum-Dekorationsteil nach einem der Ansprüche 1 bis 3, **dadurch gekennzeichnet, dass** der Trageinsatz (2) aus starrem Polymerwerkstoff besteht.

5. Fahrzeuginnenraumelementbaugruppe, auf der ein Fahrzeuginnenraum-Dekorationsteil nach einem der Ansprüche 1 bis 4 befestigt ist, **dadurch gekennzeichnet, dass** das Fahrzeuginnenraumelement (3) ein Armaturenbrett-, Türzubehör- oder Mittelkonsolenelement ist.

6. Baugruppe nach Anspruch 5, **dadurch gekennzeichnet, dass** das Fahrzeuginnenraumelement (3) ein aufgeschäumtes Teil, das mit einer Haut (33) überzogen ist, ist.

7. Baugruppe nach Anspruch 5 oder 6, **dadurch gekennzeichnet, dass** der Trageinsatz (2) eine Form hat, die derart eingerichtet ist, dass sie in einer Vertiefung (32), die in dem Fahrzeuginnenraumelement (3) vorgesehen ist, aufgenommen werden kann.

8. Zusammenfügeverfahren eines Dekorationsteils (1, 2) auf einem Fahrzeuginnenraumelement (3), umfassend
einen Befestigungsschritt einer biegsamen Folie (1), die Strass auf mindestens einer ersten Oberfläche eines Trageinsatzes (2) aufweist, wobei der Trageinsatz eine Schnittfläche (21) zum Befestigen auf einer zweiten, von der ersten Oberfläche getrennten Oberfläche umfasst,
einen Schritt des Montieren des Trageinsatzes auf das Fahrzeuginnenraumelement, wobei die Befestigungsschnittfläche eingerichtet ist, um das Fahrzeuginnenraumelement zu durchqueren, und
einen Schritt des Befestigens des Trägers auf einem Substrat durch Verformung der Befestigungsschnittfläche.

9. Zusammenfügeverfahren nach Anspruch 8, **dadurch gekennzeichnet, dass** der erste Befestigungsschritt eine Warmklebung der biegsamen Folie (1) auf den Trageinsatz (2) ist.

10. Kraftfahrzeug, das mindestens ein Fahrzeuginnenraum-Dekorationsteil nach einem der Ansprüche 1 bis 4 umfasst.

## Claims

1. An ornament for a vehicle passenger compartment including a flexible film (1) including strass, arranged to be attached in the passenger compartment, the ornament further including a support insert (2) at least partially covered by the flexible film and having an attachment interface (21) on a passenger compartment element (3).

2. The ornament for a passenger compartment of Claim 1, **characterized in that** the attachment interface (21) is provided on a surface of the support insert (2) different from that covered at least partially by the flexible film (1).

3. The ornament for a passenger compartment of Claim 1 or 2, **characterized in that** the attachment interface (21) is an attachment stud arranged so as to be fastened by deformation to the passenger compartment element (3) of the vehicle.

4. The ornament for a passenger compartment of any one of Claims 1 to 3, **characterized in that** the support insert (2) is of rigid polymer material.

5. A vehicle passenger compartment element assembly on which there is attached an ornament for a passenger compartment of one of Claims 1 to 4, **characterized in that** the passenger compartment element (3) is a dashboard element, door accessory element or central console element.

6. The assembly according to Claim 5, **characterized in that** the vehicle passenger compartment element (3) is a foamed piece covered by a skin (33).

7. The assembly according to Claim 5 or 6, **characterized in that** the support insert (2) has a shape arranged so as to be able to be housed in a recess (32) provided in the passenger compartment element (3).

8. A method for assembling an ornament (1, 2) on a passenger compartment element (3) of a vehicle, including
an attachment step of a flexible film (1) including strass on at least a first surface of a support insert (2), said support insert including an attachment interface (21) on a second surface distinct from the first surface,
a mounting step of said support insert on the passenger compartment element in which the attachment interface is arranged to pass through the passenger compartment element, and
an attachment step of said support on a substrate by deformation of the attachment interface.

9. The method for assembling according to Claim 8, **characterized in that** the first attachment step is a heat sealing of the flexible film (1) on the support insert (2).

10. A motor vehicle comprising at least one ornament for a passenger compartment according to one of Claims 1 to 4.
